# FASCICULE DE BREVET EUROPEEN

(11) **EP 1 138 563 B1**
(45) Date de publication et mention de la délivrance du brevet: **17.05.2006**
(21) Numéro de dépôt: 01400760.3
(22) Date de dépôt: 23.03.2001
(51) Int. Cl.: B60R 25/04, G07C 5/08, E05B 49/00

(54) **Système d'identification d'un véhicule automobile**
Kraftfahrzeugidentifikationssystem
Motor vehicle identification system

(30) Priorité: 30.03.2000 FR 0004058
(43) Date de publication de la demande: 04.10.2001
(73) Titulaire: Renault s.a.s., 92100 Boulogne Billancourt (FR)
(72) Inventeur: Clair, Olivier, 78960 Voisins le Bretonneux (FR); Lonc, Brigitte, 92000 Nanterre (FR); Louvel, Philippe, 92350 Le Plessis Robinson (FR)
(74) Mandataire: Davies, Owen Robert Treharne

(56) Documents cités:
- EP-A- 0 378 945
- EP-A- 0 456 916
- DE-A- 19 608 232
- DE-U- 29 508 227
- DE-U- 29 514 863
- FR-A- 2 544 782
- US-A- 4 941 569

## Description

La présente invention concerne un système d'identification d'un véhicule automobile à moteur, en particulier à combustion interne, de type véhicule particulier ou industriel.

Cette identification a pour but d'autoriser le démarrage du moteur du véhicule d'une part et de déclencher l'enregistrement d'informations relatives au véhicule, notamment relatives au fonctionnement dynamique du véhicule, et d'informations relatives à son propriétaire d'autre part.

Actuellement, il est connu d'enregistrer des informations dans une zone mémoire, intégrée dans une clef de commande du démarrage d'un moteur de véhicule.

Comme cela est décrit dans la demande de brevet français, publiée sous le numéro 2 451 848 au nom de DAIMLER BENZ, une telle mémoire peut contenir un codage pour la serrure des portes et le système d'antivol de type Neiman. Elle peut contenir également des informations sur le véhicule et des valeurs de consigne de diagnostic. Mais en aucun cas ce dispositif ne prévoit l'enregistrement des différentes opérations successives réalisées dans le service après-vente du véhicule.

Le document EP 0 378 945 décrit un système d'identification d'un véhicule dont le moteur est piloté par un calculateur central électronique de contrôle, relié à un, démarreur notamment, comportant un élement portatif a mémoire, constitué par une clé de contact porté par le conducteur du véhicule et contenant une fonction d'identification codée d'autorisation du démarrage, et au moins un lecteur destiné à identifier ladite clé, la clé comprenant un circuit électronique, qui contient des codes de fonctionnement, un identificateur codé de l'utilisateur du véhicule et une mémoire non volatile destinée à l'enregistrement d'informations relatives au véhicule, à son état, à son fonctionnement dynamique, aux défauts de fonctionnement et aux caractéristiques des réparations effectuées liées aux opérations d'entretien courant ou de dépannage et d'informations relatives au propriétaire, et le système comprenant :
- dans le véhicule :
   - un lecteur de la clé de contact pour l'identification de ladite clé;
   - une unité centrale de contrôle de l'habitacle reliée d'une part au lecteur de la clé embarqué, pour la reconnaître, et d'autre part au démarreur du moteur pour gérer les séquences de démarrage et d'arrêt du moteur et au calculateur de contrôle moteur
- hors du véhicule :
   - au moins un lecteur de la clé associé à un système informatique de traitement des informations lues dans la mémoire de la clé.

Les échanges de données, au lieu d'être assurés par les contacts pourraient être assurés par un émetteur-récepteur à infrarouge.

Le document US 4,941,569 montre un système d'identification d'un véhicule dont le moteur est piloté par un calculateur central électronique de contrôle, relié à un démarreur notamment, comportant un support tel qu'un badge, porté par le conducteur du véhicule et contenant une fonction d'identification codée d'autorisation du démarrage, et au moins un lecteur de badge destiné à identifier ledit badge, le système comprenant: - le badge, sous forme de carte, comprenant une pile, deux boutons pour l'ouverture et la fermeture des portes du véhicule, un témoin de fonctionnement, une clef de secours, ultra-plate et non apparente, et un circuit électronique, qui contient des codes de fonctionnement d'une télécommande infrarouge pour l'ouverture et la fermeture des portes, ainsi qu'un identificateur codé de l'utilisateur du véhicule.

Un autre système, à télécommande, est décrit dans la demande de brevet français publiée sous le numéro FR 2 657 643 A au nom de VALEO NEIMAN. Il comprend une fonctionnalité supplémentaire de la clef, dont le porte-clefs comporte un afficheur pour la visualisation d'informations relatives à l'état du véhicule, telles que le kilométrage ou le niveau de carburant. Mais ce système ne prévoit pas l'exploitation de ces informations par un garage ou un service d'après-vente à l'aide d'un lecteur par exemple.

Il est également connu, dans le cas où plusieurs identifiants autorisent le démarrage du moteur du véhicule, d'ajuster certains réglages d'accessoires, comme la position des sièges par exemple, en fonction de l'identifiant qui est reconnu.

L'art antérieur ne permet pas de résoudre le problème de la mémorisation d'informations relatives aux défauts et aux opérations de réparation et d'entretien effectuées en service après-vente, sur un support unique et directement lié au véhicule lui-même. Ces informations sont importantes car nécessaires lors des opérations de diagnostic ou de maintenance en service après-vente, aussi bien au guichet d'accueil du client dans le garage que pour une recherche de panne par un outil de diagnostic utilisé sur le véhicule.

Un but de la présente invention est donc de réaliser un système d'identification d'un véhicule automobile qui permet de mémoriser sur un support, tel qu'un badge, lié au véhiculedes informations relatives aux défauts et aux opérations de réparation et d'entretien.

Un autre but de l'invention est de réaliser un système d'identification d'un véhicule automobile qui comporte une fonction supplémentaire de porte-monnaie électronique sur un support tel qu'un badge, contenant un identifiant codé d'autorisation du démarrage du véhicule.

L'objet de l'invention est un système d'identification d'un véhicule dont le moteur est piloté par un calculateur central électronique de contrôle, relié à un démarreur notamment, comportant un badge, porté par le conducteur du véhicule et contenant une fonction d'identification codée d'autorisation du démarrage, et au moins un lecteur de badge destiné à identifier ledit badge, caractérisé en ce que le badge comprend notamment un circuit électronique contenant une mémoire non volatile, destinée à l'enregistrement d'informations relatives au véhicule, à son état et à son fonctionnement et d'informations relatives au propriétaire du véhicule, et en ce qu'il comprend :
- dans le véhicule :
   - un lecteur de badge pour l'identification dudit badge,
   - une unité centrale de contrôle de l'habitacle reliée d'une part au lecteur de badge embarqué, pour reconnaître le badge, et d'autre part au démarreur du moteur pour gérer les séquences de démarrage et d'arrêt du moteur et au calculateur de contrôle moteur pour déclencher les séquences d'écriture des informations sur le fonctionnement du véhicule dans ce badge, et
- hors du véhicule :
   - au moins un lecteur du badge associé à un système informatique de traitement des informations lues dans la mémoire du badge.

Selon une autre caractéristique, le système d'identification remplit une fonction de porte-monnaie électronique sur le badge servant à l'identification du véhicule.

D'autres caractéristiques et avantages de l'invention apparaîtront à la lecture de la description d'un exemple de réalisation, illustrée par les figures suivantes qui sont :
- les figures 1A et 1B: une vue d'un badge faisant partie du système d'identification selon l'invention, avec un écorché partiel ;
- la figure 2 : une vue schématique du système complet d'identification d'un véhicule selon l'invention.

Dans la description détaillée ci-après, le terme "badge" est utilisé pour indiquer d'une manière générale tout support pouvant recevoir un certain nombre d'éléments tels qu'indiqués.

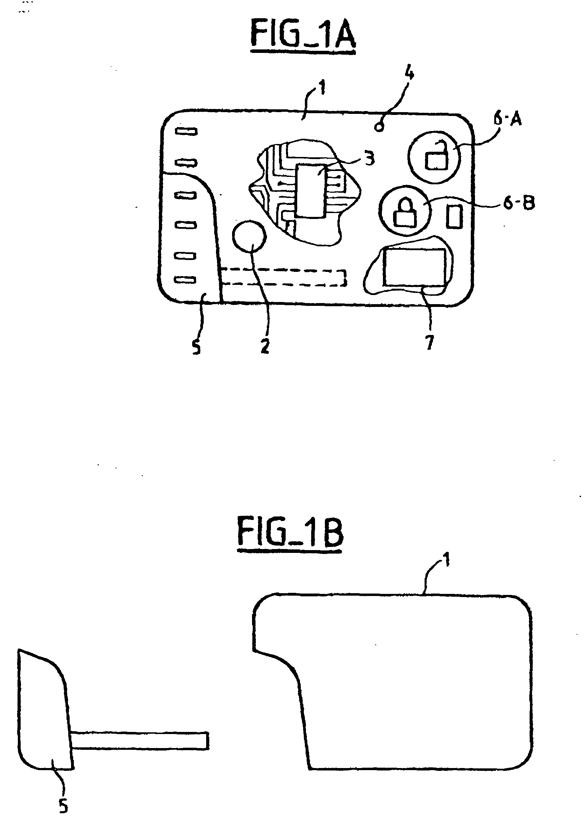

Comme le montre la figure 1, le système d'identification d'un véhicule selon l'invention comprend un badge 1, sous forme d'une carte au format d'une carte de crédit actuelle, qui contient une pile 2, un circuit électronique 3, au moins un bouton 6-A et/ou 6-B et un témoin 4 du fonctionnement. Il comprend également une clef de secours 5, ultra-plate, non apparente, logée sous la couche de plastique extérieure qui protège les différents éléments électroniques. Le bouton 6-A sert par exemple à l'ouverture des portes du véhicule tandis que le bouton 6-B sert à la fermeture.

Le circuit électronique 3 contient des codes utilisés pour faire fonctionner une télécommande radio-fréquence destinée à ouvrir et fermer les portes du véhicule. Il contient également une fonction d'identification codée de l'utilisateur du véhicule, de type transpondeur crypté par exemple. Il contient surtout une zone mémoire non volatile, destinée à l'enregistrement d'informations relatives au véhicule lui-même, à son état et à son fonctionnement et d'informations relatives au propriétaire du véhicule et/ou son utilisateur.

Les informations relatives au véhicule proprement dit sont, d'une part, les informations relatives aux caractéristiques intrinsèques du véhicule et, d'autre part, les informations dynamiques relatives à l'état courant du véhicule et à son fonctionnement.

Ainsi, les informations concernant les caractéristiques intrinsèques du véhicule, invariables au cours de la vie du véhicule sont notamment le VIN, qui est l'acronyme de l'expression anglaise "Vehicle Identification Number" pour Numéro d'Identification du Véhicule, le type de moteur, le type de boîte de vitesses, le numéro de série, la date de fabrication, la couleur, l'appellation commerciale, les caractéristiques de certains éléments comme les freins ou la suspension, les options présentes, etc ....

Ces informations doivent être écrites dans la mémoire du badge identifiant le véhicule, lors de la fabrication du véhicule, par les moyens de programmation en bord de chaîne de fabrication.

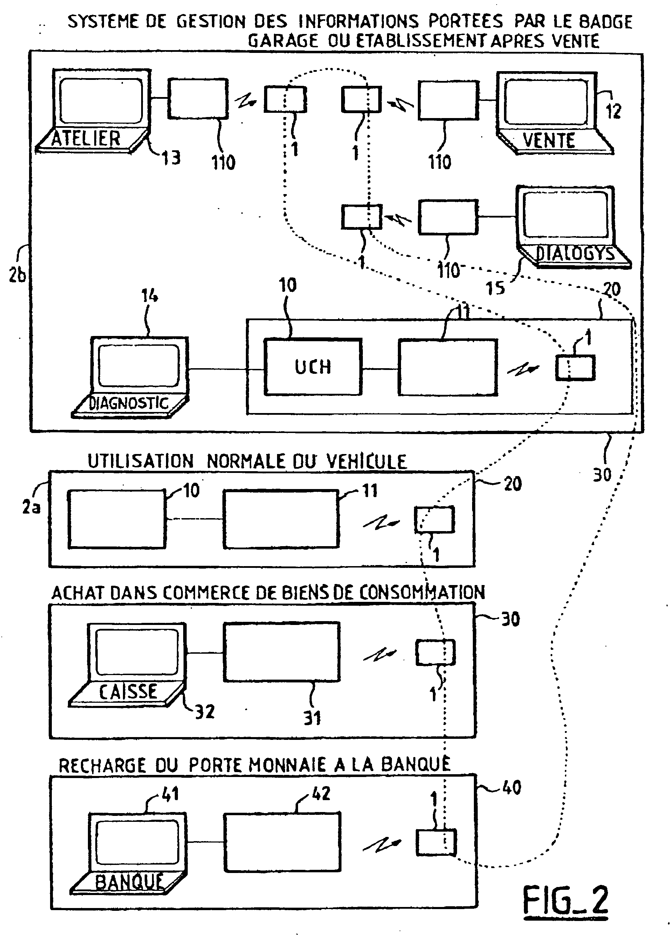

Concernant l'état du véhicule en cours de fonctionnement, les informations évoluent à chaque utilisation et doivent être écrites par une unité centrale de contrôle de l'habitacle 10, embarqué dans le véhicule 20, comme le montre la partie embarquée 2a de la figure 2.

Ces informations dynamiques sont, notamment, le kilométrage, le niveau de carburant et d'huile, la pression de chaque pneu, l'autonomie de vidange, la consommation de carburant, les pannes présentes et leurs contextes associés. A chaque arrêt du moteur du véhicule, l'unité de contrôle habitacle 10 envoie ces données, par l'intermédiaire d'un lecteur de badge 11 embarqué, dans la mémoire du circuit électronique 3 du badge 1, données qu'elle reçoit du calculateur de contrôle moteur et de différents capteurs.

En effet, le badge 1 ne peut être retiré du lecteur 11 situé près de la planche de bord du véhicule 20, qu'après l'arrêt du moteur, ce qui rend la manoeuvre transparente pour le client.

Il existe également des informations relatives aux défauts de fonctionnement détectés et aux réparations effectuées sur le véhicule. Elles indiquent la nature et les caractéristiques liées aux opérations d'entretien courant ou de dépannage exceptionnel effectuées sur le véhicule. Ces informations dynamiques sont mises à jour et stockées dans la mémoire du badge, par un lecteur de badge situé dans le garage d'après-vente.

Quant aux informations relatives au propriétaire du véhicule, comme son identité, son adresse, ses numéros de téléphone, le numéro du contrat d'assurance du véhicule, les contrats de service en cours, elles sont mémorisées dans le badge lors de la vente par un système relié à un lecteur de badge. Ces informations étant dynamiques, car pouvant changer lors de la revente du véhicule, ou tout simplement quand le propriétaire change de coordonnées, elles sont mises à jour par l'intermédiaire d'un lecteur de badge du garage d'après-vente.

La partie 2b du schéma de la figure 2 représente le système informatique de traitement des informations lues dans les badges par des lecteurs de badge, dans différents sites 30, tels qu'un garage ou un établissement d'après-vente, qui utilisent les informations mémorisées dans le badge des véhicules et qui les mettent à jour.

Lors de l'achat d'un véhicule neuf, dans une concession par exemple, les informations relatives au client sont initialisées sur le badge 1 par le poste de vente 12 des véhicules neufs, via un lecteur de badge 110 d'après-vente, distinct du lecteur embarqué sur le véhicule.

Pour des opérations d'après-vente, lors de l'accueil du client dans un garage, le badge 1 du véhicule est lu par un lecteur 110 et les informations lues concernant le client et le véhicule sont chargées automatiquement dans un système de gestion 13, ce qui évite tout oubli ou toute imprécision.

Si la réparation du véhicule nécessite un diagnostic de pannes, l'outil de diagnostic 14 est alors connecté à l'unité centrale 10 de contrôle de l'habitacle, embarquée dans le véhicule 20, qui va lui transmettre les informations stockées dans le badge et lues par le lecteur 11 du véhicule. Cette lecture des informations concernant le véhicule permet d'identifier facilement et rapidement les équipements et les options présents sur le véhicule en question.

Pour l'approvisionnement éventuel de pièces de rechange, un système 15 de recherche des pièces de rechange, appelé poste "Dialogys", est connecté à un lecteur de badge 110 d'après-vente, afin de charger automatiquement les options et caractéristiques du véhicule dans la mémoire du badge 1 et d'ainsi sélectionner sans équivoque les bonnes références pour les pièces de rechange nécessaires à la réparation du véhicule.

Dans le cas de flottes de véhicules, dans les entreprises ou les services de location de véhicules, un lecteur d'identifiant peut être connecté au système informatique qui gère le parc automobile, en termes d'état de roulage ou de kilométrage des véhicules loués. Les informations dynamiques concernant l'état courant de chaque véhicule sont automatiquement chargées dans ce système de gestion, ce qui, d'une part, permet aussi bien au gestionnaire qu'à chaque utilisateur de ne pas remplir des papiers, moins pratiques et moins fiables, et d'autre part permet d'aiguiller les véhicules défectueux vers le garage quand un défaut a été enregistré dans le badge.

Enfin, après la réparation ou l'entretien d'un véhicule, les opérations techniques effectuées sur le véhicule sont mémorisées sur le badge au moyen d'un lecteur 110 d'après-vente connecté au système de gestion, au moment de la facturation au client.

Selon une autre caractéristique, le système d'identification remplit une fonction de porte-monnaie électronique sur le même badge qui sert à l'identification du véhicule.

Pour cela, le badge 1 comporte de plus un circuit 7 de porte-monnaie électronique, comme le montre la figure 1, qui est un circuit électriquement indépendant. Ce circuit a une mémoire qui sert de compte bancaire électronique et peut être débitée ou créditée par opération sans contact. Pour l'achat de biens de consommation dans différents commerces 30, le paiement s'effectue sans contact à une certaine distance du moyen de paiement, quelques centimètres par exemple, via un lecteur 31. Ce moyen de paiement est un dispositif terminal de paiement ou caisse électronique 32. Le conducteur du véhicule peut ainsi réaliser quelques achats de faible valeur, tels que cigarettes, journaux, pain par exemple, directement avec le badge 1 d'identification de son véhicule sans avoir besoin de monnaie ou d'une carte bancaire spécifique. Préférentiellement, l'approvisionnement du porte-monnaie électronique, situé dans le badge 1, est réalisé dans une banque 40, par un dispositif terminal 41 de chargement de monnaie électronique, relié à un lecteur de badge 42.

Parmi les avantages que présente le système d'identification selon l'invention, on peut citer la facilité pour le propriétaire d'un véhicule de se présenter dans un garage pour l'entretien ou la réparation de son véhicule, puisque, lors de son accueil il présente simplement son badge qui contient toutes les informations le concernant, comme concernant les références et l'état de son véhicule.

La maintenance du véhicule est également facilitée grâce à la mémorisation des différents défauts et réparations survenus sur le véhicule, ainsi que l'aide au diagnostic des dysfonctionnements et à la sélection des pièces de rechange. Les tâches administratives liées à la facturation sont également réduites, comme la gestion des flottes de véhicules.

Enfin, il devient possible d'acheter des biens de consommation courants simplement avec le badge de son véhicule.

## Revendications

1. Système d'identification d'un véhicule dont le moteur est piloté par un calculateur central électronique de contrôle, relié à un démarreur notamment, comportant un support tel qu'un badge (1), porté par le conducteur du véhicule et contenant une fonction d'identification codée d'autorisation du démarrage, et au moins un lecteur de badge destiné à identifier ledit badge, le système comprenant:
- le badge (1), sous forme de carte, comprenant une pile (2), au moins un bouton (6) pour l'ouverture et la fermeture des portes du véhicule, un témoin (4) de fonctionnement, une clef de secours (5), ultra-plate et non apparente, et un circuit électronique (3), qui contient des codes de fonctionnement d'une télécommande radio-fréquence pour l'ouverture et la fermeture des portes, ainsi qu'un identificateur codé de l'utilisateur du véhicule et une mémoire non volatile destinée à l'enregistrement d'informations relatives au véhicule, à son état, à son fonctionnement dynamique, aux défauts de fonctionnement et aux caractéristiques des réparations effectuées liées aux opérations d'entretien courant ou de dépannage et d'informations relatives au propriétaire,
et
le système comprenant :
- dans le véhicule :
• un lecteur de badge (11) pour l'identification dudit badge,
• une unité centrale de contrôle de l'habitacle (10) reliée d'une part au lecteur de badge (11) embarqué, pour reconnaître le badge, et d'autre part au démarreur du moteur pour gérer les séquences de démarrage et d'arrêt du moteur et au calculateur de contrôle moteur pour déclencher à chaque arrêt du moteur les séquences d'écriture des informations sur le fonctionnement dynamique du véhicule dans ce badge, et
- hors du véhicule :
• au moins un lecteur du badge (110) associé à un système informatique de traitement des informations lues dans la mémoire du badge.

2. Système d'identification d'un véhicule selon la revendication 1, **caractérisé en ce que** les informations concernant le véhicule sont :
- relatives aux caractéristiques intrinsèques du véhicule, invariables au cours de la vie du véhicule, et écrites dans la mémoire du badge (1) lors de la fabrication du véhicule par des moyens de programmation en bord de chaîne de fabrication ;
- relatives à l'état du véhicule, évoluant à chaque utilisation et écrites, dans la mémoire du badge (1), à chaque arrêt du moteur, par l'unité centrale de contrôle de l'habitacle (10), embarquée dans le véhicule ;
- relatives aux défauts de fonctionnement détectés et aux réparations d'entretien courant ou de dépannage effectuées sur le véhicule, et écrites dans la mémoire du badge par un lecteur de badge (110) situé dans le garage d'après-vente (30).

3. Système d'identification d'un véhicule selon la revendication 1 ou 2, **caractérisé en ce que** les informations dynamiques relatives au propriétaire du véhicule sont stockées dans la mémoire du badge (1) par un lecteur de badge (110) relié au système de vente ou d'après-vente du véhicule.

4. Système d'identification d'un véhicule selon la revendication 2 ou 3, **caractérisé en ce que**, dans le cas d'une réparation du véhicule nécessitant un diagnostic de panne, un outil de diagnostic (14) est connecté à l'unité centrale (10) de contrôle de l'habitacle qui transmet les informations mémorisées dans le badge (1) et lues par le lecteur (11) embarqué.

5. Système d'identification d'un véhicule selon l'une des revendications 2 à 4, **caractérisé en ce que**, dans le cas d'un approvisionnement de pièces de rechange, un système (15) de recherche de pièces est connecté à un lecteur de badge (110) d'après-vente qui lui charge automatiquement les caractéristiques du véhicule.

6. Système d'identification d'un véhicule selon l'une des revendications 1 à 5, **caractérisé en ce que** le badge comporte de plus un circuit de porte-monnaie électronique (7).

## Claims

1. A system for identifying a vehicle of which the engine is pilot-controlled by a central electronic management computer connected to a starter in particular, comprising a support such as a badge (1) carried by the driver of the vehicle and containing a coded identification function for authorising starting, and at least one badge reader intended to identify said badge, the system comprising
- the badge (1) in card form comprising a battery (2), at least one button (6) for opening and closing the doors of the vehicle, an operating telltale light (4), an ultra-flat and inconspicuous emergency key (5) and an electronic circuit (3) which contains operating codes of a radio-frequency remote control for opening and closing the doors, as well as a coded identifier for the user of the vehicle and a non-volatile memory intended for recording items of information relating to the vehicle, to its state, to its dynamic operation, to operating defects and to the characteristics of repairs made linked to routine maintenance or breakdown operations and items of information relating to the owner,
and
the system comprising:
- in the vehicle:
• a badge reader (11) for identification of said badge, and
• a central management unit for the passenger compartment (10), which is connected on the one hand to the on-board badge reader (11) to recognise the badge and on the other hand to the starter of the engine to manage the sequences of starting and stopping the engine and to the engine management computer for triggering upon each stoppage of the engine the sequences for writing items of information relating to dynamic operation of the vehicle into said badge, and
- outside the vehicle:
• at least one badge reader (110) associated with a data processing system for processing the items of information read in the memory of the badge.

2. A system for identifying a vehicle according to claim 1 **characterised in that** the items of information concerning the vehicle are:
- relative to the intrinsic characteristics of the vehicle, which are invariable in the course of the life of the vehicle and written into the memory of the badge (1) upon production of the vehicle by programming means on the production line;
- relative to the state of the vehicle which changes at each use and written into the memory of the badge (1) at each stoppage of the engine by the central management unit of the passenger compartment (10), which is installed in the vehicle; and
- relative to the detected operating defects and to routine maintenance or breakdown repairs carried out on the vehicle and written into the memory of the badge by a badge reader (110) disposed in the after-sales garage (30).

3. A system for identifying a vehicle according to claim 1 or claim 2 **characterised in that** the items of dynamic information relating to the owner of the vehicle are stored in the memory of the badge (1) by a badge reader (110) connected to the sales or after-sales system of the vehicle.

4. A system for identifying a vehicle according to claim 2 or claim 3 **characterised in that**, in the case of a repair to the vehicle requiring a breakdown diagnosis, a diagnostic tool (14) is connected to the central management unit (10) of the passenger compartment, which transmits the items of information stored in the badge (1) and read by the installed reader (11).

5. A system for identifying a vehicle according to one of claims 2 to 4 **characterised in that**, in the case of a supply of spare parts, a parts search system (15) is connected to an after-sales badge reader (110) which automatically loads thereto the characteristics of the vehicle.

6. A system for identifying a vehicle according to one of claims 1 to 5 **characterised in that** the badge also comprises an electronic wallet circuit (7).

## Patentansprüche

1. Identifikationssystem eines Fahrzeugs, dessen Motor durch einen elektronischen Zentralrechner zur Steuerung gesteuert wird, insbesondere verbunden mit einem Anlasser, umfassend einen Träger wie einen Ausweis (1), der vom Fahrer des Fahrzeugs getragen wird und eine Funktion der codierten Identifizierung der Autorisierung des Anlassens enthält, und mindestens einen Ausweisleser, der dazu bestimmt ist, den Ausweis zu identifizieren, wobei das System umfasst:
- den Ausweis (1) in Form einer Karte, umfassend eine Batterie (2), mindestens einen Knopf (6) zum Öffnen und zum Schließen der Türen des Fahrzeugs, eine Betriebsanzeige (4), einen Hilfsschlüssel (5), äußerst flach und nicht in Erscheinung tretend, und einen elektronischen Schaltkreis (3), der die Betriebscodes einer Funkfrequenz-Fernsteuerung zum Öffnen und zum Schließen der Türen enthält, sowie einen codierten Identifikator des Benutzers des Fahrzeugs und einen nicht flüchtigen Speicher, der zum Speichern der Informationen in Bezug auf das Fahrzeug bestimmt ist, auf seinen Zustand, auf seinen dynamischen Betrieb, auf Funktionsmängel und auf die Merkmale der durchgeführten Reparaturen, die mit den Operationen der üblichen Wartung oder der Pannenhilfe verbunden sind, und der Informationen in Bezug auf den Besitzer,
und wobei das System aufweist:
- in dem Fahrzeug:
• einen Ausweisleser (11) zur Identifizierung des Ausweises,
• eine Zentraleinheit zur Steuerung der Fahrgastzelle (10), die einerseits mit dem sich an Board befindlichen Ausweisleser (11) verbunden ist, um den Ausweis zu erkennen, und andererseits mit dem Anlasser des Motors, um die Sequenzen des Anlassens oder Anhaltens des Motors zu steuern, und mit dem Steuerrechner des Motors, um bei jedem Anhalten des Motors die Sequenzen des Schreibens von Informationen über den dynamischen Betrieb des Fahrzeugs in diesem Ausweis auszulösen, und
- außerhalb des Fahrzeugs:
• mindestens einen Ausweisleser (110), der mit einem Computersystem zur Verarbeitung der Informationen verbunden ist, die im Speicher des Ausweises gelesen werden.

2. Identifikationssystem eines Fahrzeugs nach Anspruch 1, **dadurch gekennzeichnet, dass** die das Fahrzeug betreffenden Informationen:
- sich auf die dem Fahrzeug innewohnenden Eigenschaften beziehen, unveränderbar während der Lebensdauer des Fahrzeugs und in den Speicher des Ausweises bei der Herstellung des Fahrzeugs durch Programmiermittel innerhalb der Fertigungsstraße geschrieben werden;
- sich auf den Zustand des Fahrzeugs beziehen, der sich bei jeder Verwendung fortentwickelt und die in den Speicher des Ausweises (1) bei jedem Anhalten des Motors durch die zentrale Steuereinheit der Fahrgastzelle (10) geschrieben werden, die sich an Bord des Fahrzeugs befindet;
- sich auf die entdeckten Betriebsmängel beziehen und auf die Reparaturen der regelmäßigen Wartung oder der Pannenhilfe, die auf dem Fahrzeug ausgeführt wurden, und die in den Speicher des Ausweises durch einen Ausweisleser (110) geschrieben werden, der sich in der Kundendienstgarage (30) befindet.

3. Identifikationssystem eines Fahrzeugs nach Anspruch 1 oder 2, **dadurch gekennzeichnet, dass** die dynamischen Informationen, die sich auf den Besitzer des Fahrzeugs beziehen, im Speicher des Ausweises (1) durch einen Ausweisleser (110) gespeichert werden, der mit dem System des Verkaufs oder des Kundendienstes des Fahrzeugs verbunden ist.

4. Identifikationssystem eines Fahrzeugs nach den Ansprüchen 2 oder 3, **dadurch gekennzeichnet, dass** im Fall einer Reparatur des Fahrzeugs, die eine Pannendiagnose benötigt, ein Diagnosewerkzeug (14) mit der Zentraleinheit (10) der Steuerung der Fahrgastzelle verbunden wird, dass die im Ausweis (1) gespeicherten und durch den sich an Bord befindlichen Leser (11) gelesenen Informationen überträgt.

5. Identifikationssystem eines Fahrzeugs nach den Ansprüchen 2 bis 4, **dadurch gekennzeichnet, dass** im Fall der Belieferung mit Ersatzteilen ein System (15) zur Suche von Teilen mit einem Ausweisleser (110) des Kundendienstes verbunden wird, der ihm automatisch die Eigenschaften des Fahrzeugs lädt.

6. Identifikationssystem eines Fahrzeugs nach einem der Ansprüche 1 bis 5, **dadurch gekennzeichnet, dass** der Ausweis darüber hinaus eine elektronische Geldbörsen-Schaltung (7) umfasst.
